# EUROPEAN PATENT APPLICATION

(11) **EP 4 309 759 A1**
(43) Date of publication of application: **24.01.2024**
(21) Application number: 22200230.5
(22) Date of filing: 07.10.2022
(51) Int. Cl.: B01D 37/04, B01D 46/00, B01D 46/46, B01D 53/30, F24F 3/16, G05B 23/02

(54) **AIR PURIFICATION DEVICE AND METHOD OF ESTIMATING AIR FILTER LIFETIME**

(30) Priority: 18.07.2022 TW 111126845
(71) Applicant: Power Logic (Jiangxi Tai Yi) Co., Ltd., 343223 Ji'an City, Jiangxi (CN)
(72) Inventor: HSU, Wen-Faung, 235 New Taipei City (TW); HSU, Chia-Heng, 235 New Taipei City (TW); CHEN, Hung-Chou, 235 New Taipei City (TW)
(74) Representative: 2K Patentanwälte Blasberg Kewitz & Reichel

(57) **Abstract**

An air purification device (1, 1', 2) and a method of estimating air filter lifetime are disclosed. The method of estimating air filter lifetime includes steps of: detecting, by an air quality sensing module (21), an air quality of an airflow before the airflow is filtered by a filter module (27) to generate an air quality sensing value correspondingly; calculating consumption values of the filter module (27) according to the air quality sensing value by a computation module (23); continuously calculating and updating an estimated lifetime value of the filter module (27) by using the consumption values based on a frequency by the computation module (23); and when the estimated lifetime value of the filter module (27) is not greater than a threshold, generating a notification command of changing the filter module (27).

## Description

### BACKGROUND OF THE DISCLOSURE

### Technical Field

The disclosure generally relates to air purification devices, and more particularly, to air purification devices that can estimate filter lifetime and methods applied by the air purification devices for estimating filter lifetime.

### Description of Related Art

The clean effect of the filter of the air purification device decreases along with the increasing operating time of the devices. In order to remind the user to change the filter, a notification is usually provided by the device.

In general, the machine operates to clean the air and meanwhile counts the consumption time of the filer. In other words, the consumption time is proportional to the operation time of the machine. When the total consumption time of the filter meets the default condition, the machine prompts the notification to remind the user to clean or change the filter, however, the different air quality condition affects the damage level of the filter accordingly. The worse the air quality condition, the more pollutants the filter adsorbs per unit time. If the air quality condition is better, the filter adsorbs fewer pollutants per unit time and loses less cleaning ability. The current method is to estimate the consumption lifetime of the filter just based on the operation time of the device, but the method causes some problems: if the pollutant-adsorbed level of the filter is estimated optimistically, the air quality will decrease because the filter is too late to be changed; if the pollutant-adsorbed level of the filter is estimated pessimistically, the filter will be changed before the filter loses its cleanability so that the filter resource is wasted.

Accordingly, how to accurately estimate the real damage level of the filter to avoid wasting the resource and increase the air-cleaning effect is a technical problem that the invention desires to solve.

### SUMMARY OF THE DISCLOSURE

The disclosure provides an air purification device and a method of estimating air filter lifetime, which may notify the user to change the filter immediately at the time point that the filter loses pollutant-adsorbing ability to maintain the comfortable air quality.

The present disclosure provides a method of estimating air filter lifetime, including steps of: detecting, by an air quality sensing module, an air quality of an airflow before the airflow is filtered by a filter module to generate an air quality sensing value correspondingly; calculating consumption values of the filter module according to the air quality sensing value by a computation module; continuously calculating and updating an estimated lifetime value of the filter module by using the consumption values based on a frequency by the computation module; and when the estimated lifetime value of the filter module is not greater than a threshold, generating a notification command of changing the filter module.

The present disclosure of an embodiment provides an air purification device, including a body having an accommodation space, a filter module disposed in the accommodation space, an air quality sensing module, and a computation module. The air quality sensing module is configured to detect an air quality of an airflow before the airflow is filtered by the filter module to generate an air quality sensing value correspondingly. The computation module is connected to the air quality sensing module and configured to calculate consumption values of the filter module according to the air quality sensing value, continuously calculate and update an estimated lifetime value of the filter module by using the consumption values based on a frequency, and generate a notification command of changing the filter module when determining that the estimated lifetime value of the filter module is not greater than a threshold.

The disclosure may increase the usage efficiency and air-cleaned effect of the filter and keep the balance between the usage efficiency and air-cleaned effect.

### DESCRIPTION OF THE DRAWINGS

Fig. 1A is a diagram illustrating an air purification device according to one embodiment of the present disclosure.
Fig. 1B is a diagram illustrating an air purification device according to another embodiment of the present disclosure.
Fig. 2 is a block diagram illustrating an air purification device according to one embodiment of the present disclosure.
Fig. 3 is a flow chart illustrating a method of estimating air filter lifetime according to one embodiment of the present disclosure.
Fig. 4 is a flow chart illustrating a method of estimating air filter lifetime according to another embodiment of the present disclosure.

### DETAILED DESCRIPTION

In cooperation with the attached drawings, the technical contents and detailed description of the present disclosure are described hereinafter according to multiple embodiments, being not used to limit its executing scope. Any equivalent variation and modification made according to appended claims is all covered by the claims claimed by the present disclosure.

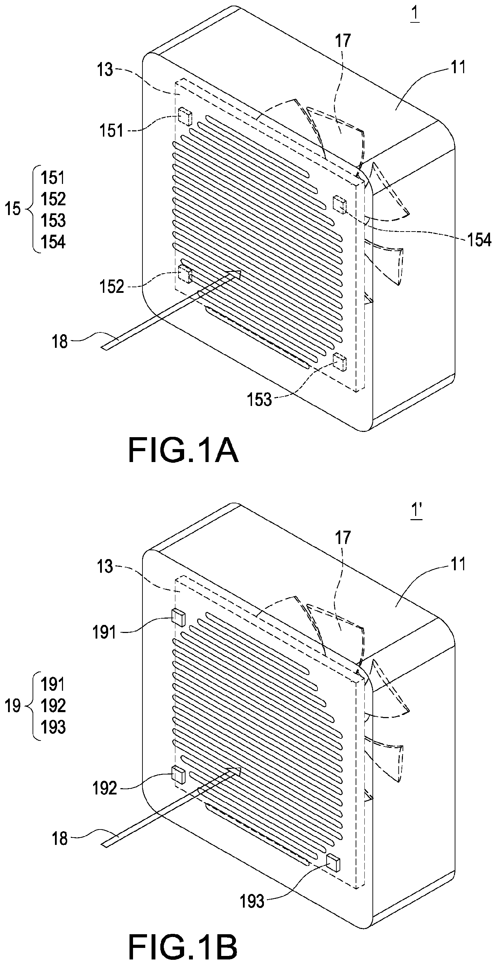

Please refers to Fig. 1A. Fig. 1A is a diagram illustrating an air purification device according to one embodiment of the present disclosure. Fig. 1A provides an air purification device 1 which may be disposed in any space where it is to be cleaned. The air purification device 1 includes a body 11. The body 11 has an accommodation space. In one embodiment, the body 11 is configured to accommodate a filter module 13, an air quality sensing module 15, and an airflow-generating module 17. The air quality sensing module 15 includes one or more sensors. In the embodiment of Fig. 1A, the air quality sensing module 15 includes sensors 151 to 154, but the number of the sensors is not limited herein. The air quality sensing module 15 is configured to detect air quality in the environments, generate an air quality sensing value correspondingly, and transmit the air quality sensing value to the air purification device 1 by the wired or wireless transmission, such that the air purification device 1 may analyze the air quality. In the embodiment, the air quality sensing module 15 is disposed inside the body 11 and at the intake side of the filter module 13 (i.e., at the side of the filter module 13 where the airflow is not filtered yet). The air quality sensing module 15 may be adjacent to or touched with the filter module 13 based on the internal structural design (such as the support stand) of the body 11. When the airflow-generating module 17 operates and generates the airflows, the airflows make the air in the accommodation space pass by the air quality sensing module 15 and pass through the filter module 13 along an airflow direction 18. Therefore, the air quality sensing module 15 may detect the air quality per unit time before the air is cleaned.

Please refers to Fig. 1B. Fig. 1B is a diagram illustrating an air purification device according to another embodiment of the present disclosure. The air purification device 1' includes an air quality sensing module 19. Similarly, the air quality sensing module 19 includes one or more sensors, such as sensors 191, 192, and 193. The difference between the air purification device 1' and the air purification device 1 of Fig. 1A is that the air quality sensing module 19 of the air purification device 1' may be disposed outside the body 11. For example, the air quality sensing module 19 is disposed outside the housing of the body 11 and is adj acent to the housing by supporting structure or adhered to the surface of the housing. The air purification device 1' may be positioned in any corner of living spaces, and the sensors 191, 192, and 193 may be disposed at any site with a distance from the air purification device 1' respectively (e.g., on the housing of the body 11 or on the wall of the living space). Similarly, the air quality sensing module 19 is configured to detect the environments, generate the air quality sensing value correspondingly, and transmit the air quality sensing value to the air purification device 1' by the wired or wireless transmission, such that the air purification device 1' may analyze the air quality.

It is noted that at least one opening (the reference number is not shown) is disposed on the body 11 of Fig. 1A and Fig. 1B to provide the air into the accommodation space of the body 11, but the disclosure does not limit the shape and the position of the opening on the body 11 where the opening is settled.

Furthermore, the position where the airflow-generating module 17 is settled is shown as one embodiment of Fig. 1A and Fig. 1B, but the disclosure does not limit the airflow-generating module 17 and the filter module 13 in the parallel arrangement as shown in the Figs. For example, the airflow-generating module 17 and the filter module 13 may also be arranged to form the acute angle or the right angle. In other words, any arrangement that the airflow can be made and the filter module 13 filters the air belongs to the scope of the disclosure. On the other hand, the shape of the body is not limited in the disclosure, and any shape of the body which has the accommodation space belongs to the scope of the disclosure.

In some embodiments, the filter module 13 may be the activated carbon filter, the High-Efficiency Particulate Air (HEPA) filter, the antibacterial filter, the electrostatic precipitation filter, the volatile organic compounds (VOC) filter, the photocatalyst filter, and so on. On the other embodiment, the filter module 13 has the composite filter structure which includes more than one type of the filters listed above.

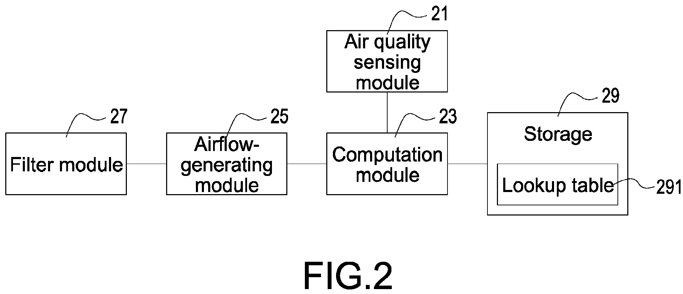

Please refers to Fig. 2. Fig. 2 is a block diagram illustrating an air purification device according to one embodiment of the present disclosure. The air purification device 2 includes an air quality sensing module 21, a computation module 23, an airflow-generating module 25, a filter module 27, and storage 29. The air quality sensing module 21, the airflow-generating module 25, and the storage 29 are connected to the computation module 23 respectively.

In some embodiments, the air quality sensing module 21 is configured to detect the air quality before the airflow is filtered by the filter module 27 to generate the air quality sensing value correspondingly.

For example, the air quality sensing module 21 includes the gas sensors for detecting fine particulate matter (PM2.5), particulate matter (PM10), sulfur dioxide (SO₂), nitrogen oxides (NOₓ), carbon monoxide (CO), and the trioxygen (O₃). The air quality sensing module 21 generates the gas concentration according to the types of gas that the air quality sensing module 21 detects and regards the gas concentration to be the air quality sensing value. Similar to the air quality sensing modules 15 and 19 of Fig. 1A and Fig. 1B, the air quality sensing module 21 includes one or more sensors that may detect one or more types of gas to generate the air quality sensing value correspondingly.

To accurately and realistically estimate the damage level of the filter module 27, in some embodiments, the computation module 23 calculates consumption values of the filter module 27 according to the air quality sensing value and continuously calculates and updates the estimated lifetime value of the filter module 27 with a frequency based on the consumption values. When determining that the estimated lifetime value of the filter module 27 is not greater than a threshold, the computation module 23 generates a notification command of changing the filter module 27.

Generally, the filter module 27 has the max value (or full value) of the estimated lifetime value when the filter module 27 is new, and the disclosure quantizes the estimated lifetime value, such as the value 20,000. For the sake of interpretation, the following description takes the PM2.5 values as an example of the air quality sensing value and illustrates that the filter module 27 is new and the estimated lifetime value of the filter module 27 has the max value in its initial state, and the estimated lifetime value is subtracted, from the max value, by the consumption values successively while the air purification device 2 operates.

The air quality sensing module 21 continuously detects the air in the environments, generates the PM2.5 value periodically (e.g., per 1 second), and transmits the value to the computation module 23. After the PM2.5 value generated in the 1st second (e.g., the value 800) is transmitted to the computation module 23, the computation module 23 calculates the PM2.5 value (the value 800) to obtain the consumption value (e.g., the value 47) of the filter module 27. Then, the computation module 23 subtracts the value 47 from the estimated lifetime value 20,000 of the filter module 27 and updates the estimated lifetime value by the value 19,953 which is the result value of the subtraction. After the PM2.5 value (e.g., the value 798) which is generated in the 2nd second by the air quality sensing module 21 is transmitted to the computation module 23, the computation module 23 calculates the PM2.5 value which is 798 to obtain the consumption value (e.g., the value 46) of the filter module 27, and the consumption value (e.g., the value 46) is subtracted from the estimated lifetime value of the filter module 27 which is 19,953 to obtain the estimated lifetime value 19,907 which is updated. Similarly, the computation module 23 continuously calculates and updates the estimated lifetime value of the filter module 27.

In some embodiments, the execution that the computation module 23 calculates the consumption value according to the air quality sensing value includes the execution that the computation module 23 searches the air quality sensing value in the lookup table to obtain the consumption value or the execution that the computation module 23 calculates the consumption value by substituting the air quality sensing value in a function. In the embodiment of applying the lookup table, as shown in Fig. 2, the storage 29 stores a lookup table 291. The lookup table 291 stores the consumption values respectively corresponding to a plurality of air quality sensing values. In other embodiments, the lookup table 291 can be stored in a memory of the computation module 23 while the storage 29 storing the lookup table 291 is an option.

In some embodiments, the lookup table may be corresponding to a type of filter in the disclosure. Therefore, the storage 29 may store one or more lookup tables. Each lookup table is associated with the type of filter, and each lookup table stores the consumption values respectively corresponding to a plurality of air quality sensing values. For example, three types of filters may filter PM2.5, and three lookup tables are stored in the storage 29 for each lookup table corresponding to one type of filter. In the case of a plurality of gas types, the storage 29 stores a plurality of lookup tables and each lookup table corresponds to each gas type. The lookup table 291 may be created according to experimental data in the disclosure.

The following description illustrates the process of creating the lookup table of the disclosure. First, the experiment staff arranges experimental filters and sensors in an experimental environment full of gas with PM2.5. The experimental filter continuously filters the gas with PM2.5 in the experimental environment and the sensing data is continuously recorded in the experiment. Taking that the sensing data of the PM2.5 is the value 999 in the initial state of the experimental environment as an example (the effective sensing data of the sensor ranges from 0 to 999, that is, the initial state of the experimental environment is extremely awful). After the experimental filter filters the air for 15 minutes, the sensing data of the sensors decreases below the value of 20, and meanwhile, the filter is also damaged to some degree. After the experiment is repeated 6 times by using the same experimental filter to clean the air, the efficiency of the experimental filter decreases obviously. The experiment is finished when the filtering efficiency of the experimental filter is lower than the default condition. The effective usage time of the experimental filter can be estimated by the experimental data, that is, 90 minutes. After the experimental filter is used for over 90 minutes, the filtering efficiency is poor. The consumption value can be quantized based on the filtering efficiency and the usage time length of the experimental filter after multiple times of the experiments. Therefore, the lookup table for each type of filter can be created according to the sensing data of each time segment and the consumption value of the experimental filter in each complete experiment.

In some embodiments, the lookup table stores one consumption value corresponding to each air quality sensing value (e.g., the PM2.5 value is 800, and the consumption value corresponding to the PM2.5 value 800 is the value 47) or stores one consumption value corresponding to each section of the air quality sensing value (e.g., the section of the PM2.5 value ranges from 900 to 999, and the consumption value corresponding to the section is the value 53).

Because the filter module 27 continuously adsorbs the pollutant in the air, the estimated lifetime value will decrease with being subtracted constantly by the consumption value. The computation module 23 continuously monitors the estimated lifetime value of the filter module 27, and when the estimated lifetime value is not greater than a threshold (e.g., the value 0), the computation module 23 generates the notification command to remind the user to change the filter module 27.

In some embodiments, the air purification device 2 further includes a prompt module (not shown) and the prompt module is connected to the computation module 23 to send a prompt signal. For example, the computation module 23 transmits the notification command to the prompt module and the prompt module provides prompting information about the usage status of the filter module 27 according to the notification command. The prompt module may be but not limited to, a lighting module, a display module, a speaker, and any electronic component that may send the light information, graphics and text information, and sound information to inform the user the current usage status of the filter module 27.

In some embodiments, the air quality sensing module 21 senses current air quality in the environments and generates a first air quality sensing value, and the computation module 23 reads a first consumption value corresponding to the first air quality sensing value from the lookup table. The computation module 23 determines that the current air quality is maintained at the first air quality sensing value in a duration and continuously subtracts the first consumption value from the estimated lifetime value based on the frequency to update the estimated lifetime value in the duration. When the current air quality is changed from the first air quality sensing value to a second air quality sensing value, the computation module 23 is configured to read a second consumption value corresponding to the second air quality sensing value from the lookup table. During the duration that the current air quality is maintained at the second air quality sensing value, the computation module 23 continuously subtracts the second consumption value from the estimated lifetime value based on the frequency to update the estimated lifetime value.

For example, the computation module 23 continuously receives the same air quality sensing value, e.g., the value 800, from 0 to 59th seconds, and the consumption value is the value 47 corresponding to the air quality sensing value which is the value 800. In the 1-minute duration, the computation module 23 subtracts the value 47 from the estimated lifetime value based on the frequency of once per second. The disclosure takes the filter module 27 in the new status which the estimated lifetime value is the value 20,000 as an example. After the air purification device 2 operates for 1 minute, the estimated lifetime value of the filter module 27 is updated as the value 17,180 (the result of (20,000-(47^{∗}60)).

In other embodiments, the computation module 23 continuously detects each air quality sensing value and reads the consumption value correspondingly from the lookup table. When the air quality sensing value changes, the computation module 23 reads the consumption value corresponding to the changed air quality sensing value to compute the estimated lifetime value without determining whether the air quality sensing value is changed.

In some embodiments, the computation module 23 may adjust the frequency of updating the estimated lifetime value according to the variation of the air quality sensing value. When a second air quality sensing value of a second time point is smaller than a first air quality sensing value of a first time point, the computation module 23 decreases the frequency of subtracting the consumption value from the estimated lifetime value, and the second time point is after the first time point. When the second air quality sensing value of the second time point is greater than the first air quality sensing value of the first time point, the computation module 23 increases the frequency of subtracting the second consumption value from the estimated lifetime value. In a duration from the 60th second to the 179th second, the computation module 23 receives the same air quality sensing value, such as the value 751, and the consumption value corresponding to the air quality sensing value 751 is the value 45. Because the air quality is improved (the air quality sensing value is changed from the value 800 down to 751), the damage level of the filter module 27 decreases accordingly. In the duration of the 2 minutes, the frequency of executing one subtraction computation each second may be decreased to the frequency of executing one subtraction computation in every two seconds. Therefore, the computation module 23 subtracts the consumption value which is the value 45 from the estimated lifetime value with the frequency of one execution in every two seconds. The estimated lifetime value of the filter module 27 will be updated to the value 14,480 (the result of (17,180-(45^{∗}60). In other words, the disclosure provides the frequency (such as n-times subtraction computations may be executed per second or per minute, wherein n is a positive integer) to adjust the actual consumption value of the filter module 27, so that the status of the filter module 27 can be closer to real status.

In some embodiments, the technical terms of the disclosure: "estimated lifetime value" and "consumption value" may be the values without any unit, time value, or other quantization units.

The embodiments described above are about calculating the consumption value based on the air quality sensing value to estimate the estimated lifetime value; however, in some cases, a bias exists between the consumption value being calculated and the damage that the filter module 27 suffers. For example, the air quality sensing module 21 is arranged at a distance from the filter module 27. Even though the computation module 23 calculates the consumption value which is larger than usual, it does not represent that the filter module 27 suffers more pollution than usual because the air quality sensing module 21 has the distance with the filter module 27. For other examples, the filter module 27 has good filtering efficiency. Even though the computation module 23 calculates the consumption value which is larger than usual, it does not represent that the filter module 27 suffers more pollution than usual because the filter module 27 has good endurance. Therefore, the disclosure provides the correction process for the bias by using a factor.

In some embodiments, before the computation module 23 calculates the consumption value of the filter module 27 according to the air quality sensing value, the computation module 23 adjusts the air quality sensing value according to the factor and calculates the consumption value of the filter module 27 by using the air quality sensing value which is adjusted.

The disclosure takes the filter module 27 in the new status which the estimated lifetime value is the value 20,000 as an example. When the air quality sensing value that the computation module 23 receives is the value 800, the computation module 23 divides the air quality sensing value (which is 800) by the factor (e.g., the value 4) to obtain an adjusted air quality sensing value which is the value 200, and then the computation module 23 searches the adjusted air quality sensing value 200 in the lookup table 291 to obtain the consumption value (e.g., the value 16) correspondingly. When the value 800 of the air quality sensing value is maintained for one minute and the consumption value is subtracted from the estimated lifetime value once per second, the estimated lifetime value of the filter module 27 with new status is updated to the value 19,040 (20,000-16^{∗}60) after one minute.

Compared with the above embodiments, in other embodiment, the computation module 23 may decrease the bias between the consumption value and the actual consumption of the filter module 27 by adjusting the consumption value in the disclosure. In the embodiment, the computation module 23 first calculates the consumption value according to the air quality sensing value, then adjusts the consumption value according to the factor, and then calculates and updates the estimated lifetime value of the filter module 27 by the consumption value which is adjusted.

The disclosure takes the filter module 27 in the new status which the estimated lifetime value is the value 20,000 as an example. When the air quality sensing value that the computation module 23 receives is the value 800 and the consumption value obtained from the lookup table 291 is the value 47, the computation module 23 divides the value 47 of the consumption value by the factor (e.g., the value 4) to obtain an adjusted consumption value which is the value 12 (rounding off). When the value 800 of the air quality sensing value is maintained for one minute and the consumption value is subtracted from the estimated lifetime value once per second, the estimated lifetime value of the filter module 27 with new status is updated to the value 19,280 (20,000-12^{∗}60) after one minute.

It should be noted that the factor in the disclosure is not limited to the values mentioned above. In some embodiments, the factor is associated with the type of the filter module 27. For example, in the case that the filter has good filtering efficiency, the factor may be a large value (such as the value larger than 1), such that the consumption value is adjusted to a smaller value to mitigate the difference between each result of subtractions from the estimated lifetime value in each frequency to reflect the robustness of the filter.

In other embodiments, the factor may be associated with a distance between the air quality sensing module 21 and the filter module 27. For example, when the air quality sensing module 21 is disposed adjacent to or touched with the filter module 27, such that the sensing value may reflect the situation that the filter module 27 adsorbs the pollutant, and therefore the air quality sensing value or the consumption value should not be adjusted too much (for example, the factor is recommended to be the value 1). On the other hand, when the air quality sensing module 21 is disposed outside the air purification device 2 (for example, the air purification device 2 is arranged at the corner of the living room and the air quality sensing module 21 is disposed beside the ceiling luminaire in the living room). The value generated by the air quality sensing module 21 is close to the average air quality in the living room and departs from the real situation of the filter module 27, and therefore a larger factor may be applied to directly or indirectly adjust the consumption value.

Refers to Fig. 2 again. The airflow-generating module 25 is configured to generate the airflow passing through the filter module 27, such that the filter module 27 cleans the airflow when the airflow passes through. The airflow-generating module 25 may be fans or any electronic component which may generate the airflow.

In some embodiments, the factor is associated with the operation speed of the airflow-generating module 25. For example, the larger the operation speed of the airflow-generating module 25, the more air the filter module 27 passes through per unit time and the smaller the factor is (for the example of computing the consumption value described above, when the factor is equal to the value 1, the consumption value is not adjusted; when the factor is between the value 0 and 1, the consumption value is enlarged because the amount of the air which passes through the filter per unit time is large). Therefore, the computation module 23 may adjust the size of the factor with the operation speed of the airflow-generating module 25.

Accordingly, the disclosure provides the factor to indirectly adjust the consumption value (by adjusting the air quality sensing value to adjust the consumption value) or directly adjust the consumption value, such that the consumption value which is adjusted may realistically reflect the damage level that the filter module sustains in the environments and the estimation for the estimated lifetime value of the filter module 27 may be accurate.

The embodiments described above are the computations of continuously subtracting the consumption value from the estimated lifetime value of the filter module 27 to determine whether to change the filter module 27. In other embodiments of the disclosure, the estimated lifetime value of the filter module 27 in its initial status may be the value 0, and the computation module 21 adds the consumption value to the estimated lifetime value based on the frequency and continuously updates the estimated lifetime value. When the estimated lifetime value is greater than the threshold, the computation module 21 generates the notification command of changing the filter. In the embodiments, the processes of calculating the consumption value according to the air quality sensing value are similar to the illustration above, but the embodiments of the factor are slightly different from above and will be illustrated below.

The disclosure takes the filter module 27 in the new status which the estimated lifetime value is the value 0 as an example. When the air quality sensing value that the computation module 23 receives is the value 800, the computation module 23 multiplies the air quality sensing value which value is 800 by the factor (e.g., the value 2) to obtain an adjusted air quality sensing value which is 1,600. Next, the computation module 23 searches the adjusted air quality sensing value (which is 1,600) from the lookup table 291 to obtain the consumption value (e.g., the value 235) correspondingly. When the value 800 of the air quality sensing value is maintained for one minute and the estimated lifetime value is added by the consumption value once per second, the estimated lifetime value of the filter module 27 with new status is updated to the value 3,760 (0+235^{∗}16) after one minute. Similarly, the description of directly adjusting the consumption value and adding the consumption value to the estimated lifetime value of the filter module 27 is similar to the above and not repeated.

The computation module 23 in the disclosure may be but not limited to the central processing unit (CPU), the system on chip (SoC), processors for specific applications, audio processors, digital signal processors, processing chips, or controllers for specific functions.

The storage 29 in the disclosure may be but not limited to the random access memory (RAM), the nonvolatile memory (such as the flash memory), the read-only memory (ROM), the hard disk drive (HDD), the solid-state drive (SSD), or the optical storage.

In some embodiments, the air purification device 2 may be an IoT (Internet of Things) device. The air purification device 2 further includes a communication module (not shown) which is connected to the computation module 23 and configured to transmit the air quality sensing value (data) to a cloud platform (not shown) through the Internet, such that the air quality sensing data may be stored in the cloud platform. In other embodiments, the air quality sensing data received by the air purification device 2 may be provided to the cloud platform to be analyzed, and the notification command may be transmitted back to the air purification device 2 or an application of an electronic device communicatively connected with the cloud platform to remind the user whether to change the filter.

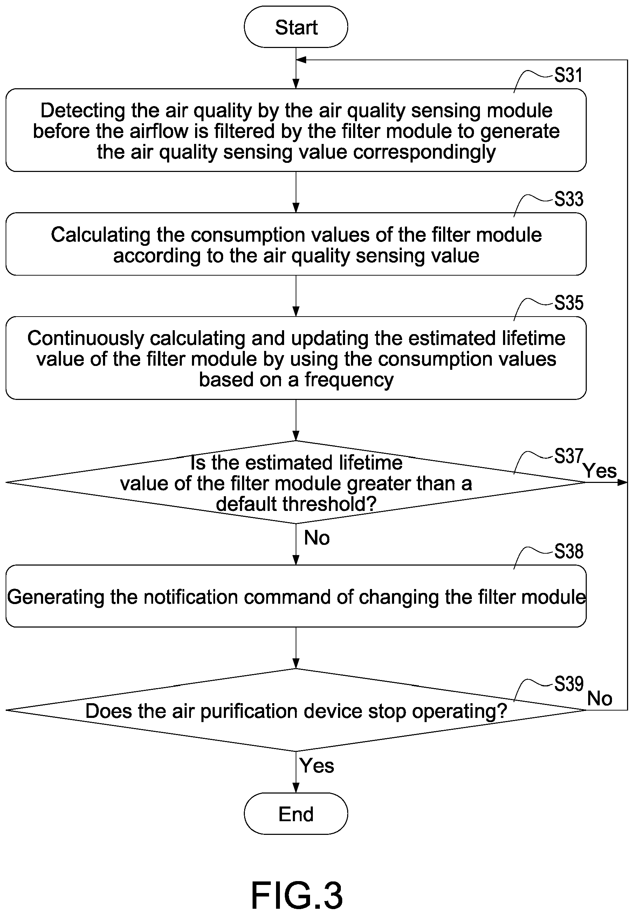

Please refers to Fig. 3. Fig. 3 is a flow chart illustrating a method of estimating air filter lifetime according to one embodiment of the present disclosure. The method of estimating air filter lifetime may be performed by the air purification device 2 of Fig. 2 and may estimate the lifetime of the filter module 27 of the air purification device 2.

In step S31, detecting, by the air quality sensing module 21, the air quality of the airflow before the airflow is filtered by the filter module 27 to generate the air quality sensing value correspondingly is performed.

In step S33, calculating the consumption value of the filter module 27 according to the air quality sensing value by the computation module 23 is performed.

In step S35, continuously calculating and updating the estimated lifetime value of the filter module 27 by using the consumption value based on a frequency by the computation module 23 is performed.

In step S37, determining whether the estimated lifetime value of the filter module 27 is greater than a default threshold by the computation module 23 is performed. When the computation module 23 determines that the estimated lifetime value is greater than the threshold (such as the value 0), the computation module 23 does not make any notification, and the method of estimating air filter lifetime goes back to step S31 to continuously detect the air quality by the air quality sensing module 21. When the computation module 23 determines that the estimated lifetime value is not greater than the threshold, the method of estimating air filter lifetime executes step S38, which is generating the notification command of changing the filter module by the computation module 23.

In step S39, determining whether to stop the operation of the air purification device 2 by the computation module 23 is performed. When the user plans to change the filter module 27 immediately, the air purification device 2 should be turned off. When the user plans to change the filter module 27 at another time, the air purification device 2 is not turned off and the method of estimating air filter lifetime goes back to step S31. It should be noted that when the air purification device 2 does not stop operating in step S39, the method of estimating air filter lifetime continues executing steps S31 to S39 regardless the low air-cleaned effect of the filter module 27 of the air purification device 2.

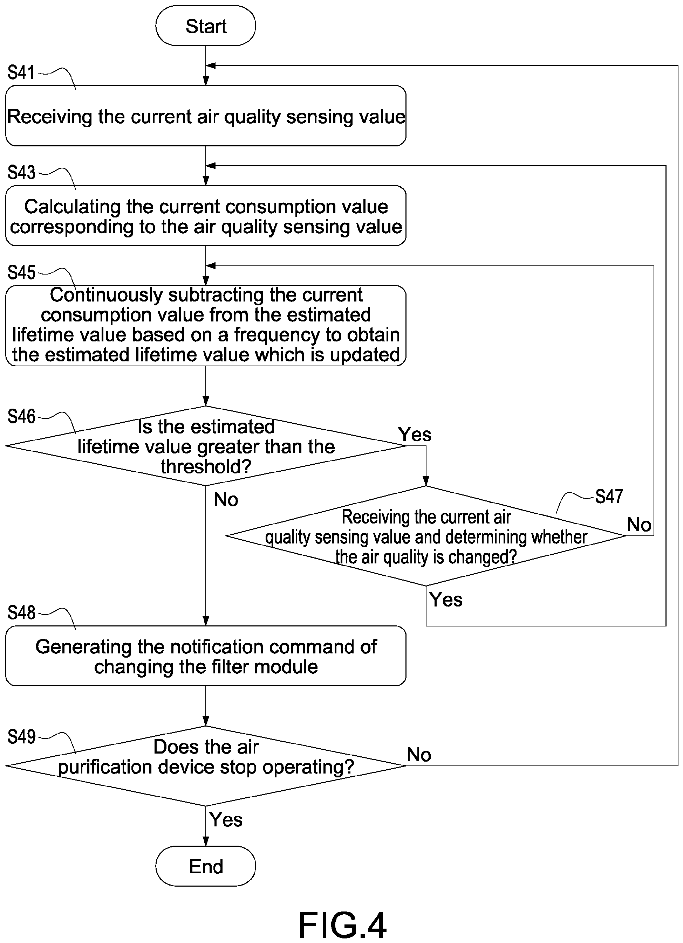

Please refers to Fig. 4. Fig. 4 is a flow chart illustrating a method of estimating air filter lifetime according to another embodiment of the present disclosure. Compared with the method of estimating air filter lifetime in Fig. 3, the method of estimating air filter lifetime in Fig. 4 further includes steps for determining whether the current air quality is changed.

In step S41, receiving the current air quality sensing value is performed.

In step S43, calculating the current consumption value corresponding to the air quality sensing value is performed.

In step S45, continuously subtracting the current consumption value from the estimated lifetime value of the filter module 27 based on a frequency to obtain the estimated lifetime value which is updated is performed.

In some embodiments, the current air quality received in a first duration is a first air quality sensing value, and a first consumption value may be calculated based on the first air quality sensing value. In the duration that the current air quality sensing value is maintained at the first air quality sensing value, the computation module 23 continuously subtracts the first consumption value from the estimated lifetime value based on the frequency and updates the estimated lifetime value of the filter module 27 once per second.

In step S46, determining whether the estimated lifetime value is greater than the threshold is performed. When the computation module 23 determines that the estimated lifetime value is greater than the threshold (such as the value 0) in step S46, step S47 is performed. When the computation module 23 determines that the estimated lifetime value is not greater than the threshold in step S46, step S48 is performed.

In step S47, receiving the current air quality sensing value and determining whether the air quality is changed is performed. In the step, when the air quality is determined to be unchanged, the method goes back to step S45 to calculate and update the estimated lifetime value of the filter module 27 according to the consumption value currently received. For example, when the determination that the current air quality is maintained at the first air quality sensing value is made in step S47, the method of estimating air filter lifetime goes back to step S45 of continuously calculating and updating the estimated lifetime value of the filter module 27 according to the first consumption value by the computation module 23. When the determination that the current air quality is changed is made in step S47, the method of estimating air filter lifetime goes back to step S43 of calculating a new consumption value according to the air quality sensing value by the computation module 23. Therefore, in step S45, the computation module 23 may calculate and update the estimated lifetime value of the filter module 27 according to the new consumption value.

In step S48, generating the notification command of changing the filter module 27 is performed.

In the embodiments of continuously determining that the current air quality remains unchanged (i.e., in the cycle processes of steps S45, S46, and S47), when the PM2.5 value detected in the space is maintained at the value 20 (and the consumption value corresponding to the PM2.5 value is the value 9) for half hour, the value 9 is subtracted from the estimated lifetime value of the filter module 27 and the estimated lifetime value is calculated and updated based on the frequency once per second for half hour until the PM2.5 value in is determined to be changed in step S47.

In step S49, determining whether to stop the operation of the air purification device 2 by the computation module 23 is performed. When the user plans to change the filter module 27 immediately, the air purification device 2 should be turned off. When the user plans to change the filter module 27 at another time, the air purification device 2 is not turned off and the method of estimating air filter lifetime goes back to step S41 of receiving the current air quality sensing value by the air quality sensing module 21.

Accordingly, the air purification device 2 and the method of estimating air filter lifetime in the disclosure may design the consumption value according to the current air quality and apply the same or different frequency to cumulatively calculate the consumption value of the filter with respect to the current air quality. The method may apply the actual air quality and dynamically adjust the estimated lifetime value of the filter module with the air quality. The disclosure provides an accurate notification according to the real consumption status of the filter module, that is, when the notification of changing the filter module is made, the air-cleaned effect of the filter module is indeed poor, such that the disclosure may prevent the filter from being wasted.

## Claims

1. A method of estimating air filter lifetime, comprising:
detecting, by an air quality sensing module (21), an air quality of an airflow before the airflow is filtered by a filter module (27) to generate an air quality sensing value correspondingly;
calculating consumption values of the filter module (27) according to the air quality sensing value by a computation module (23);
continuously calculating and updating an estimated lifetime value of the filter module (27) by using the consumption values based on a frequency by the computation module (23); and
when the estimated lifetime value of the filter module (27) is not greater than a threshold, generating a notification command of changing the filter module (27).

2. The method in claim 1, wherein the step of continuously calculating and updating the estimated lifetime value of the filter module (27) by using the consumption values based on the frequency by the computation module (23) further comprises:
during a first duration that a current air quality is maintained at a first air quality sensing value, continuously subtracting a first consumption value corresponding to the first air quality value from the estimated lifetime value based on the frequency to obtain the estimated lifetime value which is updated in the first duration.

3. The method in any of the preceding claims, wherein the step of continuously subtracting the first consumption value from the estimated lifetime value based on the frequency to obtain the estimated lifetime value which is updated further comprises:
when the current air quality changes from the first air quality sensing value to a second air quality sensing value, calculating a second consumption value corresponding to the second air quality sensing value; and
during a second duration that the current air quality is maintained at the second air quality, continuously subtracting the second consumption value from the estimated lifetime value based on the frequency to obtain the estimated lifetime value which is updated.

4. The method in any of the preceding claims, wherein the step of calculating the consumption value of the filter module (27) according to the air quality sensing value further comprises:
reading the consumption values corresponding to the air quality sensing value from a lookup table (291).

5. The method in any of the preceding claims, wherein the step of calculating the consumption values of the filter module (27) according to the air quality sensing value further comprises:
adjusting the air quality sensing value according to a factor and calculating the consumption values of the filter module (27) by using the air quality sensing value which is adjusted; and
calculating and updating the estimated lifetime value by the consumption values that the consumption values are corrected to reflect a damage level that the filter module (27) sustains in an environment.

6. The method in any of the preceding claims, wherein the step of calculating the consumption values of the filter module (27) according to the air quality sensing value further comprises:
calculating the consumption values according to the air quality sensing value; and
adjusting the consumption values according to a factor, and calculating and updating the estimated lifetime value by using the consumption values which is adjusted that the consumption values which are adjusted are corrected to reflect a damage level that the filter module (27) sustains in an environment.

7. The method in any of the preceding claims, wherein the factor is associated with a type of the filter module (27).

8. The method in any of the preceding claims, wherein the air quality sensing value comprises PM2.5 value.

9. An air purification device (1, 1', 2), comprising:
a body (11) having an accommodation space;
a filter module (13, 27) disposed in the accommodation space;
an air quality sensing module (15, 19, 21), configured to detect an air quality of an airflow before the airflow is filtered by the filter module (13, 27) to generate an air quality sensing value correspondingly; and
a computation module (23), connected to the air quality sensing module (15, 19, 21) and configured to calculate consumption values of the filter module (13, 27) according to the air quality sensing value, continuously calculate and update an estimated lifetime value of the filter module (13, 27) by using the consumption values based on a frequency, and generate a notification command of changing the filter module (13, 27) when determining that the estimated lifetime value of the filter module (13, 27) is not greater than a threshold.

10. The device in claim 9, further comprising:
a storage (29), connected to the computation module (23), wherein the storage (29) is configured to store a lookup table (291), and the lookup table (291) stores multiple consumption values respectively corresponding to a plurality of air quality sensing values;
wherein the computation module (23) is configured to read a first consumption value of the multiple consumption values corresponding to a first air quality sensing value of the plurality of air quality sensing values from the lookup table (291), and the computation module (23) is configured to subtract the first consumption value from the estimated lifetime value based on the frequency to update the estimated lifetime value of the filter module (13, 27) during a first duration when determining that a current air quality is maintained at the first air quality sensing value in the first duration.

11. The device in any of the preceding claims, wherein the computation module (23) is configured to read a second consumption value of the multiple consumption values corresponding to a second air quality sensing value of the plurality of quality sensing values from the lookup table (291) when determining that the current air quality changes from the first air quality sensing value to the second air quality sensing value, and configured to continuously subtracts the second consumption value from the estimated lifetime value based on the frequency to update the estimated lifetime value of the filter module during a second duration when the current air quality is maintained at the second air quality sensing value in the second duration.

12. The device in any of the preceding claims, wherein the computation module (23) is configured to adjust the air quality sensing value according to a factor, calculate the consumption values of the filter module (13, 27) by using the air quality sensing value which is adjusted, and calculate and update the estimated lifetime value by using the consumption values that the consumption values are corrected to reflect a damage level that the filter module (13, 27) sustains in an environment.

13. The device in any of the preceding claims, wherein the computation module (23) is configured to adjust the consumption values according to a factor after calculating the consumption values according to the air quality sensing value, and then calculates and updates the estimated lifetime value by using the consumption values which are adjusted that the consumption values which are adjusted are corrected to reflect a damage level that the filter module (13, 27) sustains in an environment.

14. The device in any of the preceding claims, wherein the factor is associated with a type of the filter module.

15. The device in any of the preceding claims, wherein the air quality sensing module is configured to detect PM2.5 to generate PM2.5 value.
